# FASCICULE DE BREVET EUROPEEN

(11) **EP 1 029 729 B1**
(45) Date de publication et mention de la délivrance du brevet: **09.06.2010**
(21) Numéro de dépôt: 00400241.6
(22) Date de dépôt: 31.01.2000
(51) Int. Cl.: B60J 10/04, B60J 10/08, B60J 5/04, B60J 10/00

(54) **Profilés rigides en matière plastique, pour la réalisation de cadres de portes de véhicules automobiles**
Starre Profilquerschnitten aus Kunststoff zur Herstellung von Kraftfahrzeugtürrahmen
Rigid profiles made of plastics for making door frames of motor vehicles

(30) Priorité: 16.02.1999 FR 9901844
(43) Date de publication de la demande: 23.08.2000
(73) Titulaire: Sealynx Automotive Transières, 92000 Nanterre (FR)
(72) Inventeur: Dron, Bernard, 92800 Puteaux (FR)
(74) Mandataire: Roger, Walter

(56) Documents cités:
- EP-A- 0 614 776
- WO-A-85/05599
- DE-A- 3 809 846
- DE-A- 19 803 445
- FR-A- 2 698 047
- GB-A- 2 316 431

## Description

La présente invention concerne des profilés rigides en matière plastique, pour la réalisation de cadres de portes de véhicules automobiles.

Les portes des véhicules automobiles comprennent généralement un caisson de porte et un cadre métallique rigidement solidaire de ce caisson, au dessus duquel il fait saillie, dans le prolongement de ses bords latéraux. Ce cadre est habituellement équipé de profilés rapportés, en élastomère ou en un matériau thermoplastique souple, assurant respectivement l'étanchéité à la périphérie de la porte et le guidage et l'étanchéité d'une vitre mobile de cette porte, apte à s'escamoter à l'intérieur du caisson de porte. Ce cadre peut assurer aussi, éventuellement, le maintien en position d'une vitre auxiliaire fixe, conjointement avec un montant auxiliaire, parfois désigné dans la technique par son appellation anglaise de « division bar ».

Les cadres métalliques de porte sont généralement réalisés par profilage et ils sont mis en forme par galbage et cintrage, avec éventuellement soudure dans les angles d'éléments distincts du cadre. Ce n'est que dans un second temps que ces cadres sont équipés des profilés en matière plastique souple mentionnés ci-dessus.

On a déjà envisagé de substituer aux cadres métalliques des portes d'automobiles des cadres constitués de profilés rigides en matière plastique, qui sont beaucoup moins lourds que les profilés métalliques. Ces profilés doivent cependant avoir une rigidité suffisante et, dans ce but, diverses formes de profilés ont été proposées.

Un problème que pose la réalisation de tels profilés en matière plastique tient au fait que leur section transversale doit varier de façon importante suivant leur longueur, pour s'adapter aux impératifs techniques du cadre de porte et conférer une rigidité suffisante à la porte. Or les techniques usuelles de fabrication de pièces en matière plastique ne se prêtent pas aisément à de telles variations de section.

En effet, la technique dite d'extrusion variable de matières thermoplastiques ou thermodurcissables à l'état pâteux ne permet que des variations de faible importance, tandis que les techniques de moulage des matières plastiques, si elles se prêtent à des variations de section beaucoup plus importantes, nécessitent des opérations complexes et coûteuses, lorsque les pièces fabriquées sont des corps creux de grande longueur.

On utilise cependant, dans d'autres domaines techniques, par exemple pour la fabrication de bouteilles en matière plastique, une technique d'extrusion soufflage, dans laquelle on dispose dans un moule à « empreinte » un tube préalablement extrudé et découpé à la longueur désirée, que l'on maintient dans ce moule à une température lui permettant de se déformer sous la pression d'un gaz, qui est injecté dans le tube.

On connaît également une technique dite d'injection soufflage, selon laquelle une ébauche de corps creux en matière thermoplastique ou thermodurcissable est placée dans un moule à injection, qui est ensuite refermé et maintenu à une température permettant à la matière plastique de se déformer. Un gaz est alors injecté sous pression dans l'ébauche et celle-ci se déforme pour épouser la forme du moule.

La Demanderesse a établi que la transposition de ces techniques à la fabrication de profilés destinés à la réalisation de cadres de porte ne pose que des problèmes mineurs de mise en oeuvre, qui sont à la portée du spécialiste de cette technique, et elle a pu ainsi produire des profilés rigides comprenant un corps creux, dont la section varie de façon importante suivant sa longueur, afin de présenter une résistance mécanique satisfaisante en tout point du cadre de porte.

L'invention a par conséquent pour objet un profilé rigide en matière thermoplastique ou thermodurcissable, destiné à la réalisation d'un cadre de porte d'un véhicule automobile et réalisé par extrusion-soufflage ou injection - soufflage, **caractérisé en ce qu**'il comprend un corps creux allongé à section transversale fermée, dont la section varie en fonction de sa longueur et auquel sont attenants extérieurement des organes d'ancrage venus de fabrication avec le corps creux et constitués de la même matière thermoplastique ou thermodurcissable, qui définissent avec la surface externe de ce corps creux un ou des logements aptes à recevoir des profilés souples d'étanchéité, en élastomère et/ou en un matériau thermoplastique.

Le corps creux peut avoir une section transversale de forme polygonale, par exemple carrée ou rectangulaire, à côtés rectilignes ou curvilignes, et les organes d'ancrage peuvent alors être constitués par des prolongements latéraux de deux parois sensiblement parallèles de ce corps creux, formant avec une autre paroi contiguë à ces deux parois un logement à section en U apte à recevoir un profilé souple. Les extrémités des parois du U peuvent éventuellement être rabattues vers l'intérieur ou l'extérieur du U, de manière à pouvoir maintenir en position une partie de forme appropriée d'un tel profilé souple.

Avantageusement, une paroi additionnelle, attenante à une paroi latérale du corps creux et/ou à des prolongements de celle-ci et venue de fabrication avec ce corps creux, vient doubler et renforcer cette paroi latérale et en est séparée par un intervalle dont la section transversale varie suivant le longueur du profilé, les deux parois formant ainsi un second corps creux accolé au premier.

Comme indiqué ci-dessus, les profilés conformes à l'invention sont réalisés par un procédé d'extrusion soufflage ou d'injection soufflage d'un type connu en soi et déjà utilisé avec succès dans d'autres domaines techniques. Il est également proposé un cadre de porte de véhicule automobile réalisé à partir d'au moins un profilé tel que décrit ci-dessus.

Les profilés contigus d'un tel cadre, en particulier dans les angles de celui-ci, peuvent être réunis par des inserts engagés à l'intérieur de ces profilés, dont ils épousent le profil interne. Ces inserts peuvent être en toute matière plastique suffisamment rigide et être pleins ou creux, ou encore en un métal gainé de matière plastique. Ils peuvent être rendus solidaires par soudage des corps creux des profilés qu'ils réunissent pour les assembler.

Une forme de réalisation de l'invention est illustrée, à titre d'exemple non limitatif, par les dessins schématiques annexés, sur lesquels :
La figure 1 est une vue en élévation latérale du cadre de porte ;
La figure 2 est une vue en perspective éclatée, illustrant l'assemblage à l'aide d'inserts des profilés contigus d'un coin supérieur de ce cadre de porte ;
La figure 3 est une vue en perspective partielle d'un profilé vertical de ce cadre de porte, équipé des profilés souples associés formant joints d'étanchéité ;
La figure 4 est une coupe transversale du cadre et des profilés souples associés, selon la ligne IV-IV de la figure 1 ;
La figure 4A est une vue analogue à la figure 4 d'une variante du profilé correspondant, équipée d'autres profilés souples formant joints d'étanchéité ;
La figure 5 est une coupe transversale selon la ligne V-V de la figure 1 ;
La figure 5A est une vue analogue à la figure 5 d'une variante du profilé correspondant, équipée d'autres profilés souples formant joints d'étanchéité ;
La figure 6 est une coupe selon la ligne VI-VI de la figure 1 ;
La figure 6A est une vue analogue à la figure 6 d'une variante du profilé correspondant, équipée d'autres profilés souples formant joints d'étanchéité ;
La figure 7 est une coupe selon l'une des lignes VII-VII de la figure 1 ;
La figure 7A est une vue analogue à la figure 7 d'une variante du profilé correspondant, équipée d'autres profilés souples formant joints d'étanchéité.

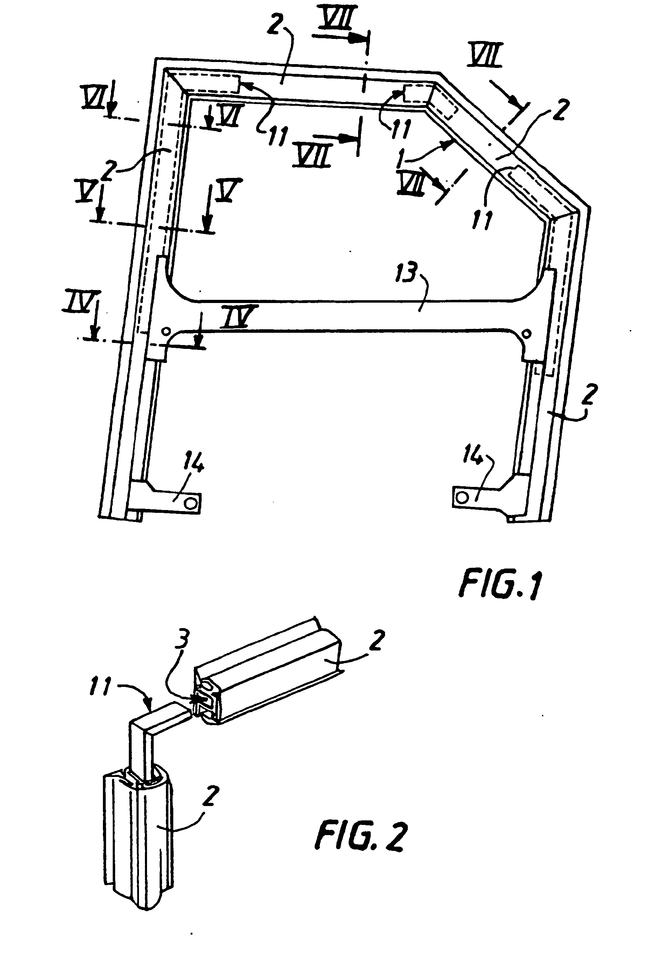

Le cadre 1 de porte d'automobile représenté sur la figure 1 est constitué d'une pluralité de profilés 2 en matière thermoplastique ou thermodurcissable, dont une partie est constituée par un corps creux allongé 3, dont la section fermée, ici de forme rectangulaire, varie de façon sensible suivant la longueur du profilé, de manière à conférer au cadre, en tout point de celui-ci, une résistance mécanique appropriée.

Deux parois parallèles du corps creux 2 se prolongent latéralement par des parties parallèles, respectivement 4 et 5, qui, avec la paroi contiguë perpendiculaire du corps creux, forment un logement à section en U, apte à recevoir, respectivement, un profilé souple 6 du type coulisse, destiné à guider dans ses mouvements une glace coulissante et à assurer l'étanchéité de celle-ci en position fermée, et un profilé souple 7 d'étanchéité. Les extrémités supérieures des branches 4 et/ou 5 des parties à section en U peuvent être recourbées vers l'intérieur du U pour maintenir en position de façon connue le profilé 6 ou 7 associé.

L'une des parois du corps creux 3 se prolongeant par les parties 4 et 5 est doublée par une paroi attenante 8, dont elle est séparée par un intervalle 9 de section variant de façon importante suivant la longueur du profilé. Les deux parois forment ainsi un second corps creux à section variable accolé au premier, qui renforce considérablement la rigidité et la résistance du profilé.

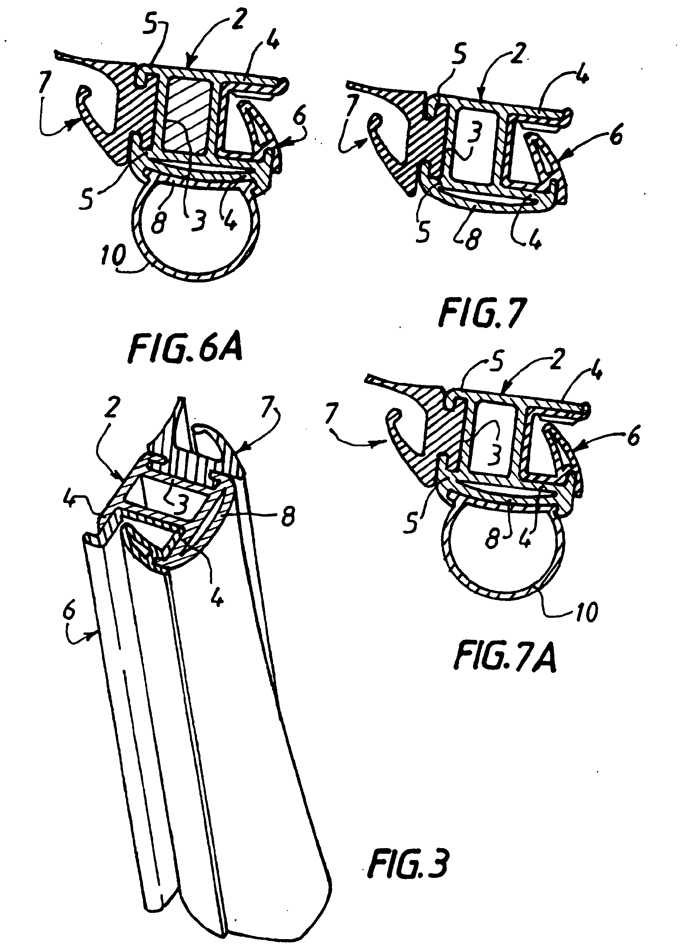

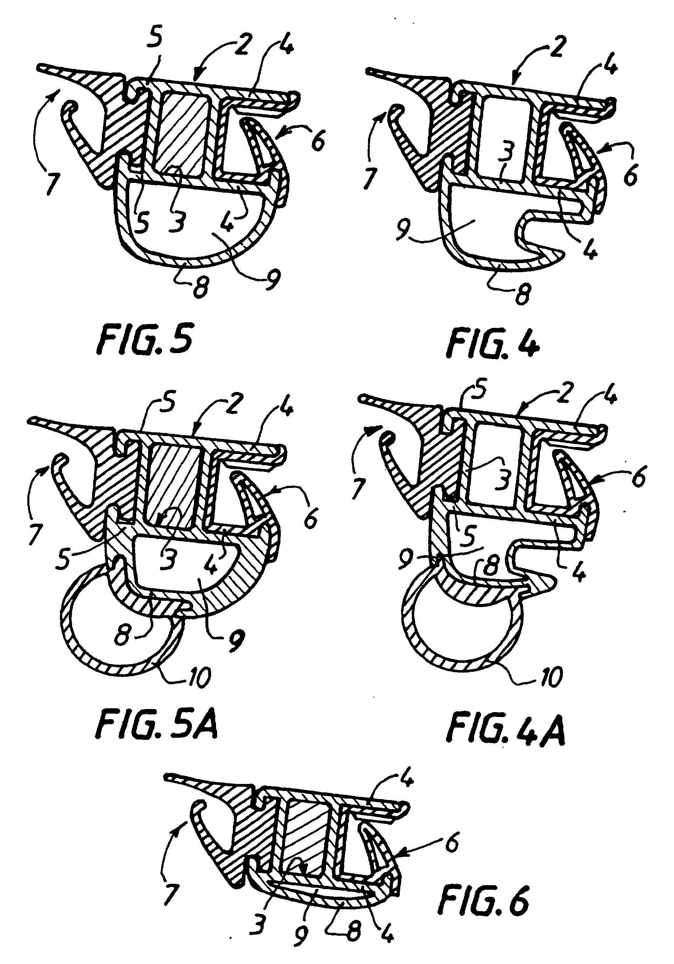

Comme on le voit sur les figures 4A, 5A, 6A et 7A, la paroi 8 peut elle-même comporter des parties recourbées servant d'organes d'ancrage pour un profilé souple 10, par exemple tubulaire, servant d'organe d'étanchéité.

Des inserts 11 (voir figures 1 et 2) peuvent être engagés à l'intérieur des extrémités contiguës des corps creux 3 des profilés du cadre de porte, en particulier dans les angles de ce cadre, dont ils épousent le profil. Ces inserts 11, qui ont une section transversale externe sensiblement égale à la section interne des corps creux 3 associés, servent à la fois de renforts et d'éléments de jonction entre profilés contigus. Ils peuvent être en matière plastique ou en métal gainé de matière plastique et être rendus solidaires des profilés dans lesquels ils sont engagés par soudage, par exemple. Ils peuvent être pleins ou creux.

On notera que les profilés conformes à l'invention peuvent avoir une forme leur permettant d'épouser le profil d'autres éléments constitutifs de cadre de porte, par exemple de la traverse 13 servant de renfort interne de la porte, comme on le voit sur la coupe transversale des figures 4 et 4A, ou d'autres poutres de renfort, ou encore des pattes 14 de fixation du cadre sur le caisson de porte.

Ainsi qu'il a été exposé ci-dessus, les profilés conformes à l'invention peuvent être fabriqués aisément par le procédé dit d'extrusion soufflage, en réalisant d'abord par extrusion un profilé en matière thermoplastique ou thermodurcissable, par exemple en polypropylène, dans lequel sont prévues localement des surépaisseurs en des emplacements judicieux. Ce profilé est ensuite logé dans un moule de la forme désirée pour le former à chaud au profil souhaité, par injection dans ce profilé d'un gaz sous pression.

Ou de façon analogue, ils peuvent être fabriqués par le procédé d'injection soufflage.

Il est ainsi possible d'obtenir de fabrication un profilé qui comporte des éléments d'ancrage pour les joints d'étanchéité en élastomère ou en matière thermoplastique pour les vitres et la porte, ainsi que pour les pattes de fixation des panneaux de porte et les poutres servant de renforts pour celle-ci (voir figure 4 par exemple).

Comme on le voit sur la figure 1, le cadre de porte réalisé à l'aide des profilés conformes à l'invention peut être livré aux utilisateurs pré-équipé de profilés souples d'étanchéité destinés à au moins une vitre, coulissante ou non, et à la porte, du mécanisme d'actionnement de la vitre coulissante et des équipements habituellement fixés dans la porte. On obtient ainsi un cadre modulaire prêt à l'emploi et ceci constitue un avantage considérable de l'invention.

## Revendications

1. Profilé rigide en matière thermoplastique ou thermodurcissable, destiné à la réalisation d'un cadre de porte d'un véhicule automobile et réalisé par extrusion-soufflage ou injection-soufflage, **caractérisé en ce qu'**il comprend un corps creux allongé (3) à section transversale fermée, dont la section varie en fonction de sa longueur et auquel sont attenants extérieurement des organes d'ancrage venus de fabrication avec le corps creux (3) et constitués de la même matière thermoplastique ou thermodurcissable, qui définissent avec la surface externe de ce corps creux un ou des logements aptes à recevoir des profilés souples (6, 7) d'étanchéité, en élastomère et/ou en un matériau thermoplastique.

2. Profilé selon la revendication 1, **caractérisé en ce que** le corps creux (3) présente une section transversale de forme polygonale, notamment rectangulaire ou carrée, à côtés rectilignes ou curvilignes.

3. Profilé selon la revendication 2, **caractérisé en ce que** les organes d'ancrage sont constitués par des prolongements latéraux de deux parois parallèles du corps creux (3), qui définissent avec une autre paroi de ce corps creux disposée entre ces prolongements un logement à section en U pour un profilé souple (6, 7) d'étanchéité.

4. Profilé selon la revendication 3, **caractérisé en ce que** les bords supérieurs des parois latérales du logement à section en U sont recourbés vers l'intérieur ou l'extérieur du U, pour maintenir en position le profilé souple (6, 7) associé.

5. Profilé selon l'une des revendications 3 et 4, **caractérisé en ce que** l'une des parois latérales du corps creux (3), notamment l'une des parois se prolongeant latéralement, est doublée extérieurement par une paroi additionnelle (8) venue de fabrication avec le profilé et constituée du même matériau thermoplastique ou thermodurcissable que celui-ci, cette paroi additionnelle (8) étant raccordée à la paroi associée du corps creux (3), de façon à former avec elle un second corps creux à section transversale variable suivant la longueur du profilé, ce second corps creux comportant éventuellement des organes d'ancrage d'au moins un profilé souple (10) d'étanchéité.

6. Profilé selon l'une des revendications 1 à 5,
**caractérisé en ce que** l'un au moins des corps creux qu'il comporte épouse la forme d'un autre élément constitutif du cadre de porte, notamment d'une poutre (13) de renfort ou d'une patte (14) de fixation.

7. Cadre de porte de véhicule automobile, **caractérisé en ce qu'**il comprend au moins un profilé selon l'une des revendications 1 à 6.

8. Cadre de porte selon la revendication 7, comprenant une pluralité de profilés selon l'une des revendications 1 à 6, **caractérisé en ce qu'**un insert (11) de profil complémentaire est engagé dans les extrémités contiguës des corps creux (3) de deux profilés successifs.

9. Cadre de porte selon la revendication 8,
**caractérisé en ce que** les inserts (11) sont solidaires, par exemple par soudage, des profilés associés.

10. Cadre selon l'une des revendications 8 à 9,
**caractérisé en ce qu'**il est pré-équipé de profilés souples formant joints d'étanchéité destinés à au moins une vitre, coulissante ou non, et à la porte, du mécanisme d'actionnement de la vitre coulissante, et des équipements habituellement fixés dans la porte, pour former un ensemble modulaire prêt à l'emploi.

## Claims

1. Rigid profiled section made of thermoplastic or thermoset, intended for producing a motor vehicle door frame and produced by extrusion-blow-moulding or injection-blow-moulding, **characterized in that** it comprises an elongate hollow body (3) of closed cross section, the cross section of which varies according to its length and contiguous with the exterior of which there are anchoring members manufactured as an integral part of the hollow body (3) and made of the same thermoplastic or thermoset, which, with the external surface of this hollow body, define one or more housings able to accept flexible sealing profiled sections (6, 7) made of elastomer and/or of a thermoplastic.

2. Profiled section according to Claim 1,
**characterized in that** the hollow body (3) has a cross section of polygonal, notably rectangular or square, shape with straight or curved sides.

3. Profiled section according to Claim 2,
**characterized in that** the anchoring members consist of lateral elongations of two parallel walls of the hollow body (3) which, with another wall of this hollow body positioned between these elongations, define a U-section housing for a flexible sealing profiled section (6, 7).

4. Profiled section according to Claim 3,
**characterized in that** the upper edges of the lateral walls of the U-section housing are bent over towards the inside or the outside of the U to hold the associated flexible profiled section (6, 7) in position.

5. Profiled section according to one of Claims 3 and 4, **characterized in that** one of the lateral walls of the hollow body (3), notably one of the laterally extended walls, is externally lined with an additional wall (8) manufactured as an integral part of the profiled section and made of the same thermoplastic or thermoset as the latter, this additional wall (8) being connected to the associated wall of the hollow body (3) in such a way as to form therewith a second hollow body, the transverse cross section of which varies along the length of the profiled section, this second hollow body possibly comprising members for anchoring at least one flexible sealing profiled section (10).

6. Profiled section according to one of Claims 1 to 5, **characterized in that** at least one of the hollow bodies it comprises espouses the shape of another constituent part of the door frame, particularly a reinforcing beam (13) or a fixing lug (14).

7. Motor vehicle door frame, **characterized in that** it comprises at least one profiled section according to one of Claims 1 to 6.

8. Door frame according to Claim 7, comprising a plurality of profiled sections according to one of Claims 1 to 6, **characterized in that** an insert (11) that has a complementary profile is engaged in the contiguous ends of the hollow bodies (3) of two successive profiled sections.

9. Door frame according to Claim 8, **characterized in that** the inserts (11) are secured, for example by welding, to the associated profiled sections.

10. Frame according to one of Claims 8 and 9, **characterized in that** it is pre-fitted with flexible profiled sections that form seals intended for at least one window, which may or may not be a drop glass, and for the door, with the drop glass actuating mechanism, and with the equipment usually attached to a door, in order to form a modular assembly ready for use.

## Patentansprüche

1. Steifes Profil aus thermoplastischem oder hitzehärtbarem Material, bestimmt zur verwirklichung eines Rahmens einer Automobiltüre und verwirklicht durch Extrusionsblasen oder Spritzblasen,
**dadurch gekennzeichnet, dass**
es einen länglichen Hohlkörper (3) mit geschlossenem Querschnitt enthält, dessen Querschnitt sich als Funktion seiner Länge ändert und an dem außen Verankerungselemente angrenzen, die von der Fertigung mit dem Hohlkörper (3) herkommen und aus demselben thermoplastischen oder hitzehärtbaren Material gebildet sind und die mit der Außenfläche des Hohlkörpers eine oder mehr als eine Aufnahme definieren, die geeignet sind, weiche Dichtungsprofile (6, 7) aus Elastomer oder einem thermoplastischen Material aufzunehmen.

2. Profil gemäß Anspruch 1, **dadurch gekennzeichnet, dass** der Hohlkörper (3) einen Querschnitt in polygonaler Form aufweist, insbesondere rechteckig oder quadratisch, mit geradlinigen oder krummlinigen Seiten.

3. Profil gemäß Anspruch 2, **dadurch gekennzeichnet, dass** die Verankerungselemente durch seitliche Verlängerungen von zwei parallelen Wänden des Hohlkörpers (3) gebildet sind, die mit einer anderen Wand des Hohlkörpers, die zwischen diesen Verlängerungen angeordnet ist, eine Aufnahme mit einem U-Querschnitt für ein weiches Dichtungsprofil (6, 7) definieren.

4. Profil gemäß Anspruch 3, **dadurch gekennzeichnet, dass** die oberen Ränder der Seitenwände der Aufnahme mit U-Querschnitt zum Inneren oder Äußeren des U gebogen sind, um das zugeordnete weiche Dichtungsprofil (6, 7) an seiner Position zu halten.

5. Profil gemäß einem der Ansprüche 3 und 4, **dadurch gekennzeichnet, dass** eine der Seitenwände des Hohlkörpers (3), insbesondere eine der Wände, die sich seitlich verlängern, außen durch eine zusätzliche Wand (8) verdoppelt ist, die von der Fertigung mit dem Profil herkommt und aus demselben thermoplastischen oder hitzehärtbaren Material wie dieses gebildet ist, wobei diese zusätzliche Wand (8) mit der zugeordneten Wand des Hohlkörpers (3) so verbunden ist, dass sie mit ihr einen zweiten Hohlkörper mit variablem Querschnitt entlang der Länge des Profils bildet, wobei dieser zweite Hohlkörper möglicherweise Verankerungselemente für zumindest ein weiches Dichtungsprofil (10) enthält.

6. Profil gemäß einem der Ansprüche 1 bis 5, **dadurch gekennzeichnet, dass** zumindest einer der Hohlkörper, die es enthält, sich der Form eines anderen konstitutiven Elements des Türrahmens anpasst, insbesondere eines Verstärkungsträgers (13) oder einer Befestigungslasche (14).

7. Türrahmen eines Automobils, **dadurch gekennzeichnet, dass** er zumindest ein Profil gemäß einem der Ansprüche 1 bis 6 enthält.

8. Türrahmen gemäß Anspruch 7, der eine Mehrzahl von Profilen gemäß einem der Ansprüche 1 bis 6 enthält, **dadurch gekennzeichnet, dass** ein Einsatz (11) mit komplementärem Profil in die benachbarten Enden der Hohlkörper (3) von zwei aufeinanderfolgenden Profilen eingesetzt ist.

9. Türrahmen gemäß Anspruch 8, **dadurch gekennzeichnet, dass** die Einsätze (11) mit den zugeordneten Profilen verbunden sind, beispielsweise durch Schweißen.

10. Rahmen gemäß einem der Ansprüche 8 bis 9, **dadurch gekennzeichnet, dass** er vorbestückt ist mit weichen Profilen, die Dichtungen bilden, die zumindest für ein gleitendes oder nicht gleitendes Fenster und für die Türe bestimmt sind, mit einem Mechanismus zur Betätigung des gleitenden Fensters und mit Ausrüstungsgegenständen, die gewöhnlicherweise in der Türe befestigt sind, um eine modulare Gesamtheit zu bilden, die fertig zur Verwendung ist.
